# EUROPEAN PATENT SPECIFICATION

(11) **EP 3 035 786 B1**
(45) Date of publication and mention of the grant of the patent: **08.08.2018**
(21) Application number: 14837855.7
(22) Date of filing: 19.08.2014
(51) Int. Cl.: A01B 73/00, A01B 3/46, A01B 15/14, A01B 59/043, A01B 63/00

(54) **ATTACHMENT SYSTEM FOR AN IMPLEMENT**
BEFESTIGUNGSSYSTEM FÜR EINE VORRICHTUNG
SYSTÈME DE FIXATION DESTINÉ À UN ACCESSOIRE

(30) Priority: 20.08.2013 NO 20131126
(43) Date of publication of application: 29.06.2016
(73) Proprietor: Kverneland Group Operations Norway AS, 4355 Kvernaland (NO)
(72) Inventor: SKJØNSBERG, Simen, N-4322 Sandnes (NO)
(74) Representative: Håmsø Patentbyrå AS
(86) International application number: PCT/NO2014/050147
(87) International publication number: WO 2015/026242

(56) References cited:
- DE-A1- 3 937 172
- DE-B1- 2 531 289
- DE-U1- 9 106 711
- FR-A1- 2 651 637
- US-A- 3 139 943
- US-A- 4 283 071
- US-A- 4 283 071

## Description

An attachment system is described, for an implement which is arranged to be connected, at least in a working position, to a three-point implement linkage on an implement carrier, and which is provided with at least one wheel, which is arranged to support the implement in a transport position.

Three-point-mounted, elongated implements attached to a tractor will extend a long way rearwards from the rear part of the tractor. A seven-furrow reversible plough will typically project 7-8 metres rearwards from the tractor. When driving through a bend, such a configuration could create situations hazardous to traffic as the rear end of the implement makes large deflections sideways. This is increased by there being, as a rule, some play between the implement and the three-point linkage of the tractor, and even if the draft links of the three-point linkage are braced laterally, there may also be some flexibility in the draft links.

Trailed implements that are rolling on wheels of their own and are attached to the drawbar, possibly some other connection point, of the tractor exhibit the advantage, in terms of transport, of following behind the tractor. For the tractor driver it is easier to take into account the fact that the wheels of a trailed implement will follow a path having a smaller turning radius than the tractor; that is to say, go further inside than the tractor in a curve, and driving with trailed implements is considered to represent a smaller risk to traffic than driving with elongated, three-point-mounted implements.

WO9728677 A1 discloses a semi-mounted reversible plough, that is to say a plough which is rolling on a set of supporting wheels both in a working position and in a transport position and is pivotally connected to the draft links of a tractor via a coupling beam. The document does not say anything about a three-point connection between the tractor and the plough. The plough is lowered to its working position and is lifted to its transport position by means of hydraulically operated supporting wheels and by vertical displacement of the coupling beam by the draft links of the tractor being operated.

FR 2651637 A1 discloses a displaceable and pivotal coupling beam for the attachment of a semi-mounted plough to the daft links of a tractor. The coupling beam may be fixed during ploughing. This document does not mention a three-point connection between the tractor and the plough, either.

The invention has for its object to remedy or reduce at least one of the drawbacks of the prior art or at least provide a useful alternative to the prior art.

The object is achieved through features, which are specified in the description below and in the claims that follow.

Even though, in the description that follows, the invention has been partly concretized as an attachment system for a three-point-mounted plough, this is not to be construed as a restriction, as the invention represents a solution to the general problems that are associated with all elongated, three-point-mounted implements.

The invention provides a transport arrangement, which combines the advantages that a three-point-mounted implement has during work, for example weight transfer to a connected implement-carrier, typically a tractor, with the advantage that a towed implement has during transport. In a first position, that is to say in a working position, a coupling beam, including two spaced-apart lower connection points and forming attachment points between the implement and draft links arranged in a three-point linkage on the implement carrier, is releasably connected to a forward portion of an implement frame, typically in a lower portion of a so-called headstock that projects upwards, forming an attachment point in its upper portion for a top link that forms an upper connection between the implement and the three-point linkage of the implement carrier. In its first position, the coupling beam is connected in a rotationally rigid manner to the implement frame.

In a second position, that is to say in a transport position, at least the lower connection points are arranged displaced in the working direction of the implement, and in said second position, the coupling beam is arranged to be pivotal around a substantially vertical pivot axis.

In a first embodiment, the lower connection points are arranged on coupling arms that are telescopically movable or pivotal in the working direction of the implement around a horizontal axis between a retracted first position and a second position pointing forwards. The adjustment from the first position to the second position releases the coupling beam from its rigid connection to the implement frame at the same time, so that the coupling beam can be pivoted around said vertical pivot axis. When resetting to the working position, the coupling beam is locked in its rotationally rigid position in the implement frame, possibly in a position in which a limited pivoting is allowed, for example for contour ploughing.

In a second embodiment of the invention, the coupling beam is pivotally supported around a vertical pivot axle arranged in the middle portion of the coupling beam and supported in an elongated slot in the implement frame. The implement frame is provided with locking means in order to, in a first position, hold the coupling beam in a retracted position, rigidly or partially pivotally connected to the implement frame, and, in a second position, hold the coupling beam in an extended, pivotal position.

In a third embodiment, two horizontally foldable drawbars are arranged between a middle portion of the coupling beam and the implement frame, which, in the first position of the coupling beam, exhibit a folded position substantially coinciding with the direction of the coupling beam. In the second position of the coupling beam, in which it has been released from the implement frame and pulled away from it in a horizontal direction, the drawbars are at least partially unfolded. The drawbars may include means that restrict the unfolding, for example in the form of a stopping device in one or more of the pivot joints formed in the drawbars.

To allow the lower connection points to be moved away from the implement frame when the implement is connected to the implement carrier, said top link must be disconnected from the upper connection point on the implement frame, possibly exhibit so large a length of stroke that the top link does not prevent the displacement of the lower connection points to their second position, preferably also allow setting to a float position to allow a free, vertical angular change of the longitudinal axis of the implement carrier relative to the longitudinal axis of the implement, for example when driving on a surface with a varying gradient of slope in the moving direction of the implement carrier and the implement. In this position, the implement may be trailed behind the implement carrier by the implement resting on one or more transport wheels suitable therefor. Said transport wheels may be wheels that, when the implement is in its working position, are used for controlling the working depth of the implement.

An advantage of the transport arrangement according to the invention is that the transport wheels are arranged with a rigidly mounted rotation axle, which simplifies the wheel arrangement of the implement in relation to what has been usual when the depth wheels of a three-point-mounted implement have been used as supporting wheels during transport, such an arrangement requiring a pivot-suspension wheel system that can pivot around a vertical axle during transport-driving through bends. To provide sufficient transportability, it is an advantage if the implement is provided with two depth wheels, possibly two bogie arrangements, which are readjustable for transport-driving, said two wheels, possibly bogie arrangements, being spaced apart transversally to the transport direction of the implement.

The invention relates more specifically to an attachment system for an implement which is arranged, at least in a working position, to be connected to a three-point implement linkage on an implement carrier, and which is provided with at least one wheel, which is arranged to support the implement in the transport position of the implement, characterized by
connection pins, which are arranged to be connected to the lower three-point connectors of a three-point implement linkage, being arranged to be adjustable between a retracted first position, wherein a coupling beam is locked to an implement frame in a rotationally rigid manner, or in a position in which a limited pivoting is allowed, and an extended second position displaced in a direction away from an implement frame, wherein the coupling beam is extendedly pivotal relative to the implement frame, wherein
the attachments system comprises coupling means arranged to connect the coupling beam to the implement frame in a rotationally rigid manner,
change from rigid to free pivotal state of the coupling beam is obtained by displacement of the connecting pins forward in relation to the implement frame thereby affecting the coupling means such that a larger distance between the connecting pins and the implement frame is obtained after unlocking locking means; and wherein
a) the coupling beam connected to the connection pins is fixed to the implement frame in said first position, and the coupling beam in said second position is pivotal around a vertical pivot axis in the implement frame, or
b) a coupling beam, which is arranged to be connected to the lower three-point connectors of the implement carrier, is releasably connected to a lower, forward frame portion of the implement, and a middle portion of the coupling beam is provided with a vertical pivot axle in engagement with cut-outs in the implement frame, the connection pins being arranged in end portions of coupling arms attached to end portions of the coupling beam and adjustable between a retracted position wherein the coupling beam is partly pivotal or rigidly locked, and a position projecting forwards wherein the coupling beam is extendedly pivotal, or
c) the coupling beam, which is arranged to be connected to the lower three-point connectors of the implement carrier, is releasably connected to a lower, forward frame portion of the implement, and two foldable drawbars connect a middle portion of the coupling beam to the lower, forward frame portion, the drawbars including several pivot joints provided with substantially vertical pivot axes.

The coupling arms may be pivotally arranged around coinciding horizontal axis, which are arranged between a first end portion and a second end portion of the coupling arms and in end portions of the coupling beam.

The coupling arms may be provided with a locking portion arranged, in the first position of the coupling arms, to lockingly engage with engagement portions of the implement frame.

The implement frame may be provided with several blocking devices, which are arranged to lockingly engage with the coupling arms.

The pivoting of the coupling beam may, in its first position and its second position, be restricted by adjustable blocking devices or abutment portions in the implement frame.

The implement may be provided with several frame couplings, which are arranged to engage with corresponding engagement portions arranged on the coupling beam.

The engagement portions may be arranged on the end portions of the coupling beam.

Each of the drawbars may be connected to the implement frame via a rear pivot joint.

The drawbars may be arranged with a rear pivot joint with coinciding pivot axes, and the pivoting of the drawbars at the rear pivot joint may be restricted by a joint block.

The drawbars may be arranged with a pivot joint each, arranged in a spaced-apart manner.

The drawbar may be provided with a stopping device restricting the unfolding movement of one of the drawbar.

The stopping device may be an adjustable abutment arranged at a middle pivot joint on at least one of the drawbars.

The implement may be a plough.

In what follows, an example of a preferred embodiment is described, which is visualized in the accompanying drawings, in which:

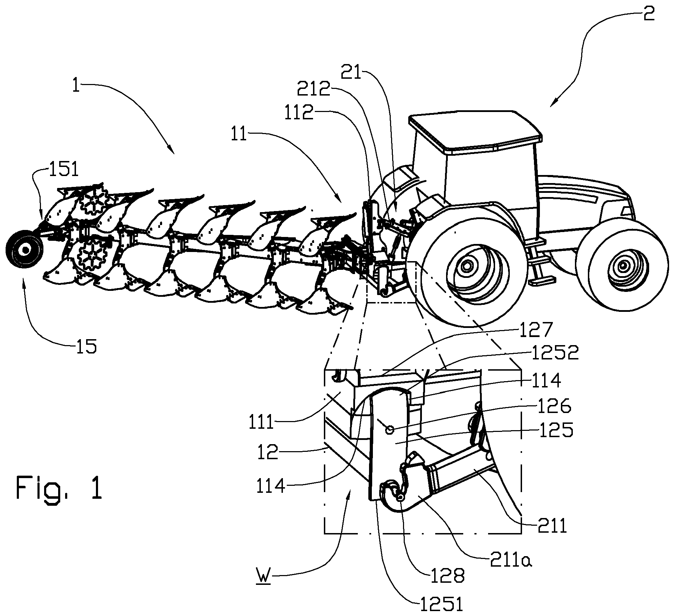

- Figure 1: shows a perspective drawing of an implement, shown here as a reversible plough, connected to an implement carrier, shown here as a tractor, with a transport arrangement according to a first embodiment of the invention, a coupling beam for the draft links of a three-point linkage being arranged in a locked manner in a first position, and lower connection points arranged on coupling arms having been pivoted around a horizontal axis to a retracted first position, in which they provide locking of the coupling beam;

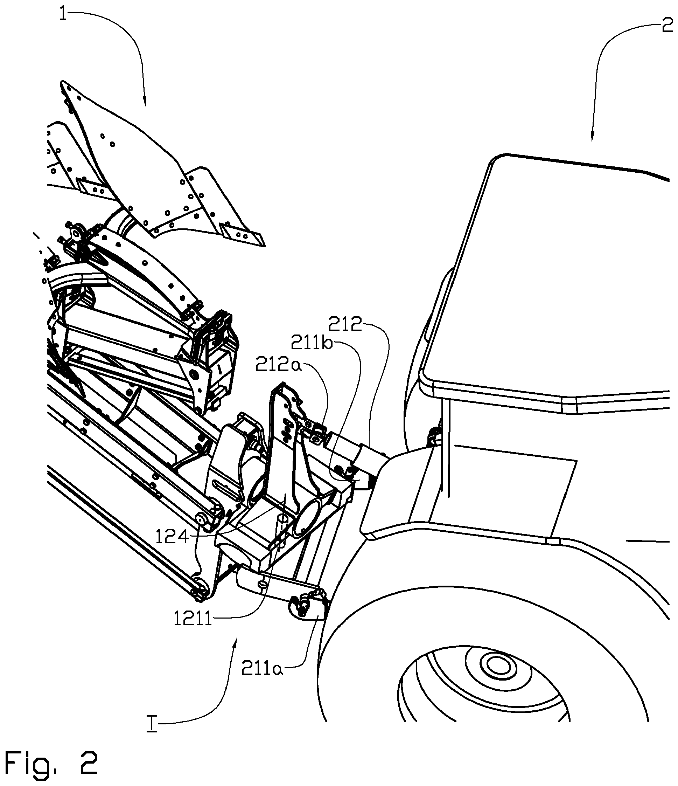

- Figure 2: shows a perspective drawing of the reversible plough attached to the tractor with the transport arrangement according to the first embodiment of the invention, the coupling beam for the draft links being arranged in a second position, pivotal around a vertical axis, and the lower connection points being placed in a forward position, the coupling arms having been pivoted around their horizontal axis into a second position pointing forwards and the top link of the three-point linkage having been extended;

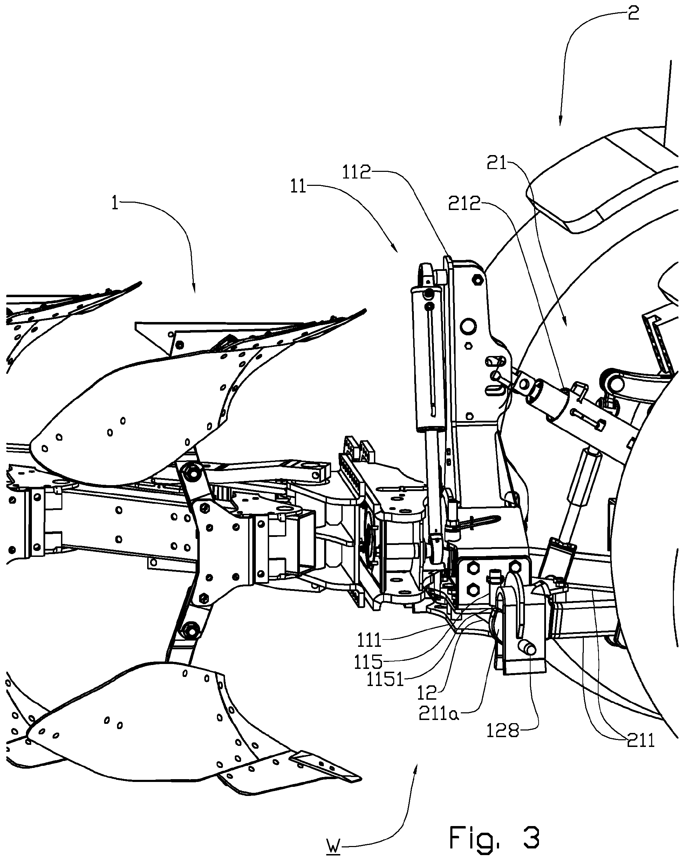

- Figure 3: shows a perspective drawing of the reversible plough attached to the tractor with a transport arrangement according to a second embodiment of the invention, a coupling beam for the draft links of the three-point linkage being pivotally supported in an implement frame by a vertical pivot axle arranged in the coupling beam being supported in elongated slots in a portion of the implement frame, shown here in a first position partially pivotal around the pivot axle, the pivoting being restricted by locking means;

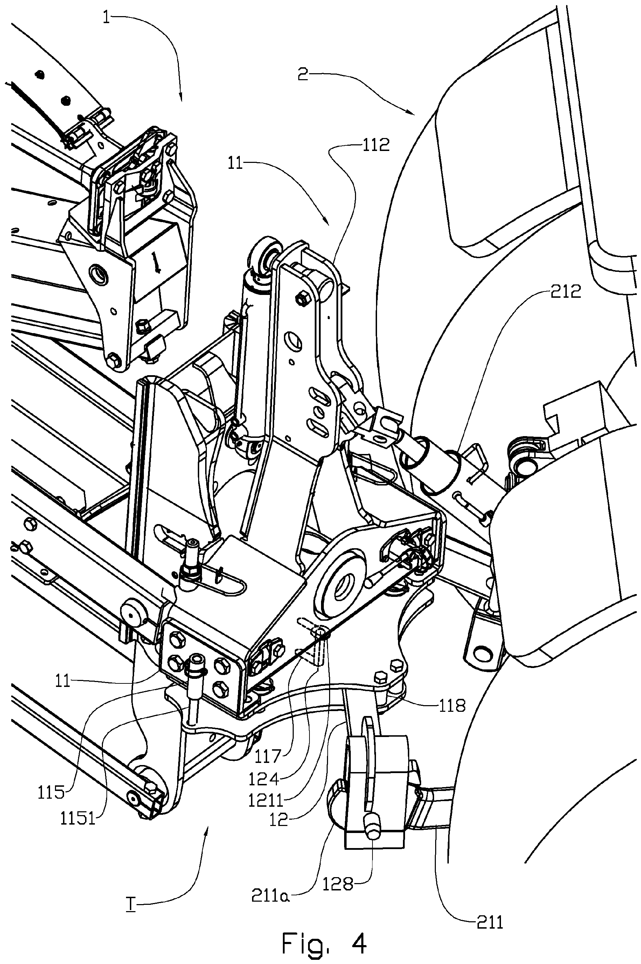

- Figure 4: shows a perspective drawing of the transport arrangement according to the second embodiment of the invention, in which the coupling beam for the draft links of the three-point linkage has been pulled forwards to its second position, pivotal around the pivot axle to a larger angle than in its first position, the pivoting being restricted by locking means;

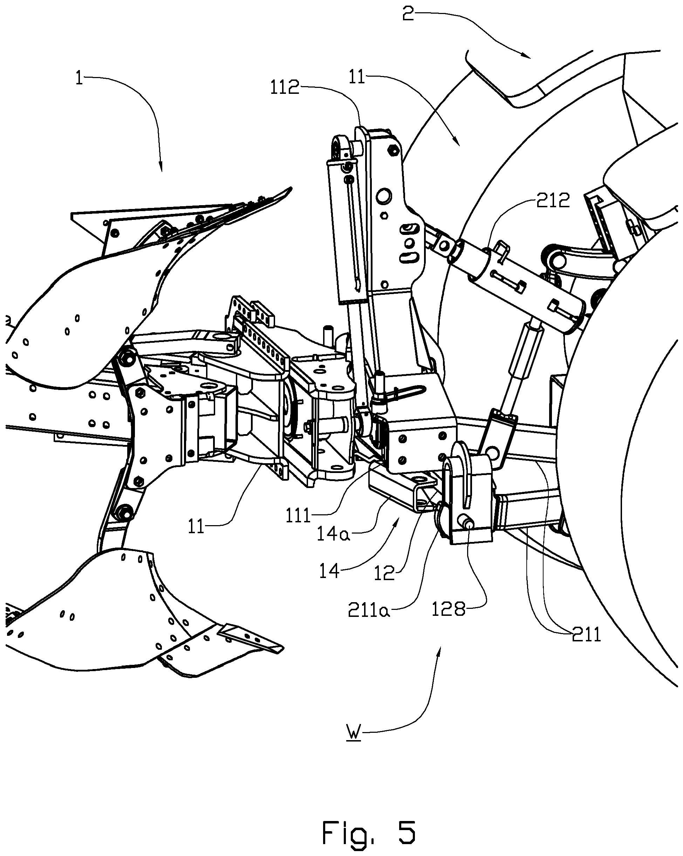

- Figure 5: shows a perspective drawing of the reversible plough attached to the tractor with a transport arrangement according to a third embodiment of the invention, a coupling beam for the draft links of the three-point linkage being rigidly connected to the implement frame, with the connected drawbars folded up;

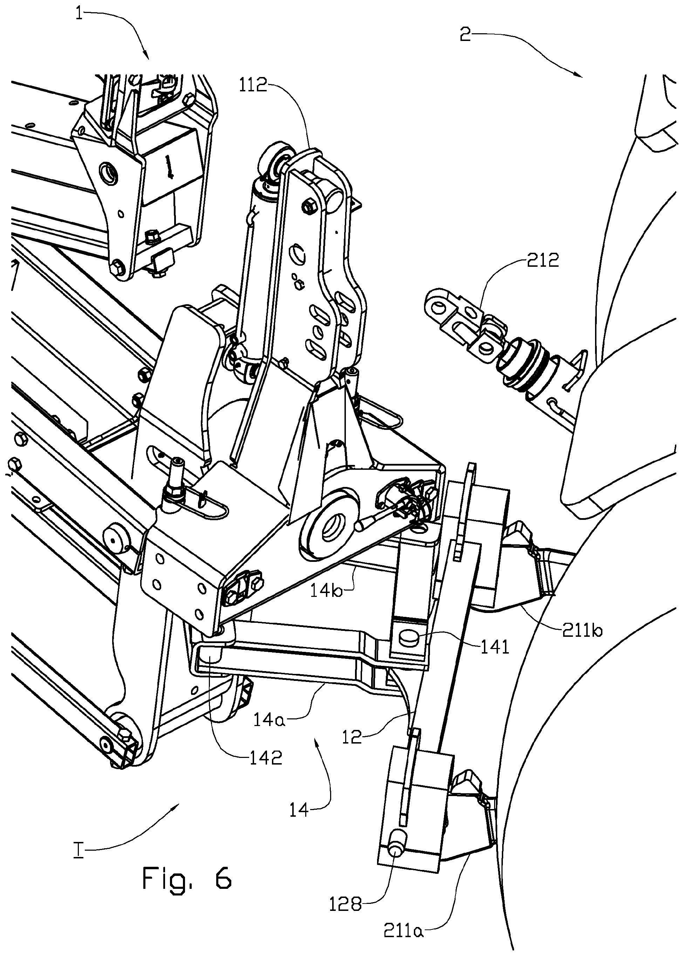

- Figure 6: shows the coupling beam in a second position released from the implement frame and with the drawbars partially extended;

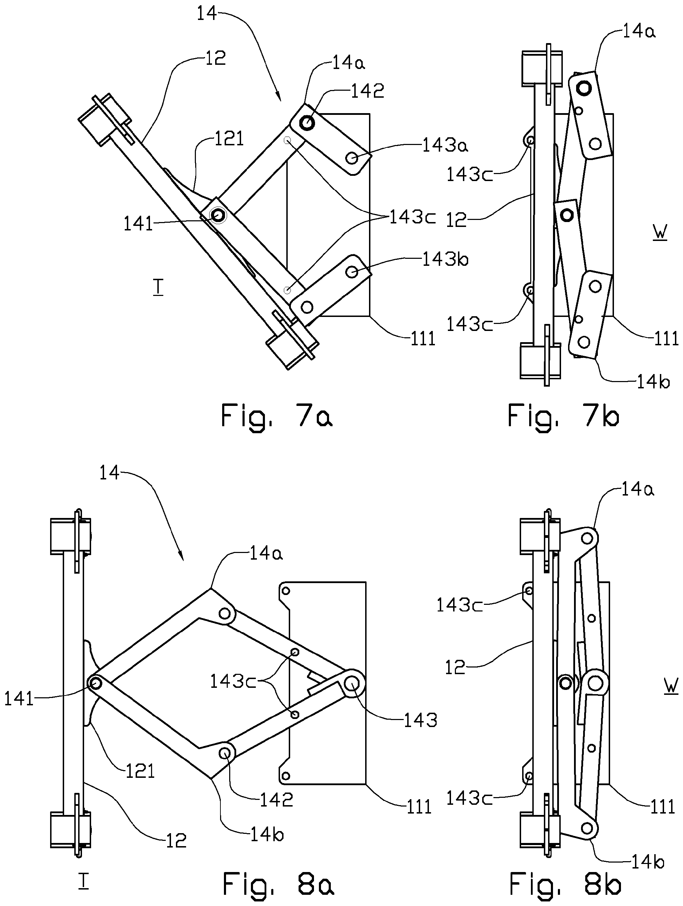

- Figures 7a and 7b: show plans of the rear pivot joints of the drawbars arranged with separate pivot axes, shown in an extended second position with the coupling beam pivoted to its maximum deflection, and in a retracted first position; and
- Figures 8a and 8b: show plans of the rear pivot joint of the drawbars arranged with coinciding pivot axes, shown in the extended second position and in the retracted first position.

In the figures, the reference numeral 1 indicates a machine, also termed an implement in the description that follows and shown in the figures as a reversible plough, connected to an implement carrier 2, typically a tractor and also called a tractor hereinafter, via an implement attachment 21 known *per se,* arranged to lift and lower the implement 1 relative to the supporting surface, in practice having three attachment points 211a, 211b, 212a between the tractor 2 and the implement 1 and thereby also being termed the three-point linkage. The three-point linkage 21 includes two draft links 211, each provided with a lower three-point connector 211a, 211b, and a top link 212 provided with an upper three-point connector 212a. The three-point connectors 211a, 211b, 212a are of a kind known per se, for example with catch hooks for connection balls.

The implement 1 includes an implement frame 11 in which, in a lower, forward portion 111, a coupling beam 12 is releasably arranged. The coupling beam 12 is arranged to be connected to the lower three-point connectors 211a, 211b. The implement frame 11 includes a headstock 112 projecting up from the lower, forward portion 111 of the implement frame 11 and forming an connection point for the upper three-point connector 212a of the top link 212.

Reference is now made to figures 1 and 2 in particular, in which a transport arrangement according to a first embodiment of the invention is shown.

The coupling beam 12 is connected to the implement frame 11, optionally pivotal around the substantially vertical pivot axis 124 of a pivot axle 1211.

In a first position, that is to say a working position W, the coupling beam 12 is rotationally rigidly attached to the implement frame 11. Coupling arms 125 which, in a first end portion 1251, are arranged to be connected to the lower three-point connectors 211a, 211b by means of connection pins 128 or the like, are attached to end portions of the coupling beam 12, pivotal around substantially horizontal pivot axes 126, which are arranged between said first end portion 1251 of the coupling arm 125 and a second end portion 1252, and, at the second end portion 1252, a locking portion 127 has been formed, arranged for engagement with an engagement portion 114 on the implement frame 11. The implement frame 11 is provided with blocking devices (not shown) which are arranged to lockingly engage with the coupling arms 125 at least when the locking portion 127 of the coupling arms 125 are in engagement with the engagement portions (not shown) of the implement frame 11. The blocking devices may also engage with the coupling arms 125 when these are arranged in a second position pivoted forwards (not shown). The blocking devices may be remote-controlled, for example by means of hydraulic actuators (not shown).

When the coupling arms 125 have been pivoted away from their first position W, the coupling beam 12 may, in a second position T, be pivoted freely, at least within certain outer limits, around its vertical pivot axis 124, there being a vertical pivot axle 1211 supported in a lower, forward frame portion 111 (see figure 2).

When the coupling arms 125 are adjusted from the first position to the second position, an increased distance is achieved between the implement carrier 2 and the implement 1, while, at the same time, the coupling beam 12 is made pivotal relative to the implement frame 11. Thereby the implement 1 may be trailed behind the tractor 2 by the implement 1 being supported by the draft links 211 of the tractor and depth wheels or supporting wheels 15 arranged in the rear portion of the implement 1. Reference is made to the detailed description of the adjustment between the first and second positions W, T, following after the description of the third exemplary embodiment of the invention.

Now reference is made to figures 3 and 4, in which a transport arrangement according to a second embodiment of the invention is shown. The coupling beam 12 is arranged in the forward, lower frame portion 111. A vertical pivot axle 1211 (see figure 4) arranged in the middle portion of the coupling beam 12 is supported with its pivot axis 124 in elongated cut-outs 117, also called frame slots, formed in the lower, forward frame portion 111 of the implement frame 11 and arranged in the longitudinal direction of the implement 1. The coupling beam's 12 travelling in the longitudinal direction of the implement 1 and pivoting around the pivot axis 124 of the pivot axle 1211 are restricted by blocking devices 115, shown here as displaceable locking pins 1151 and fixed abutment portions 118 in the implement frame 11.

In its first position W, the coupling beam 12 has been moved backwards to its rear position, in which it may be rotationally rigidly locked to the implement frame 11 or be partially pivotal around its pivot axis 124, for example for the implement 1 better to follow the implement carrier 2 in working conditions in which the tractor 2 follows the landscape contours in a field that is being worked, for example during contour ploughing.

In its second position T, the coupling beam 12 has been moved forwards to its forward position in which it is arranged to be pivotal around its pivot axis 124, the pivot axle 1211 preferably being prevented from being displaced in the frame slots 117.

Reference is now made particularly to figures 5, 6, 7a, 7b, 8a and 8b, in which a transport arrangement according to a third embodiment of the invention is shown. With engagement portions (not shown) suitable therefor, the coupling beam 12 is arranged to lockingly engage with frame couplings 13, alternatively several joint blocks 143c arranged in the implement frame 11. This position is the first position W of the coupling beam 12, see figure 5. The frame couplings 13, alternatively the joint blocks 143c may be operated by actuators (not shown). The actuators may be remote-controlled.

The end portions of the coupling beam 12 is arranged to be connected to the lower three-point connectors 211a, 211b by means of connection pins 128 or the like.

An extendable transport drawbar 14 is formed by two drawbars 14a, 14b which are foldable around vertical pivot axes and are connected to a middle portion 121 of the coupling beam 12 via a forward pivot joint 141. The drawbars 14a, 14b are connected via a rear pivot joint 143 each to the forward, lower frame portion 111 of the implement frame 11. The rear pivot joints 143 may be separate from each other and spaced apart in the transverse direction of the implement 1, see the reference numerals 143a, 143b in figures 7a and 7b, but may coincide, see the reference numeral 143 in figures 8a and 8b. In the latter configuration, the rear, common pivot joint 143 must be lockable so that the extended drawbars 14a, 14b form a non-pivotal extension of the implement frame 11, for example by the drawbars 14a, 14b resting, in their extended position, against joint blocks 143c (see figure 8a) arranged in the implement frame 11.

Each of the drawbars 14a, 14b also includes a middle pivot joint 142.

In a folded position (see figures 7b and 8b), the drawbars 14a, 14b may be arranged in a pocket (not shown) provided in the lower, forward frame portion 111 of the implement frame 11.

When it is desirable to transport-drive the implement 1 in a trailed position behind the tractor 2, the implement 1 is lowered onto the supporting surface, and the top link 212 is disconnected 1 from the headstock 112 of the implement 1, possibly is set to the hydraulic float position. Before the coupling beam 12 is adjusted from the first position W to the second position T, the wheel(s) 15 of the implement 1 that is (are) arranged to be used during transport-driving are adjusted to its (their) transport position(s) and the depth-control device 151 (see figure 1) is operated so that the rear portion of the implement 1 is lifted clear of the supporting surface.

According to the first embodiment of the invention, the coupling beam 12 is released from its first position W by the locking portions 127 of the coupling arms 125 being disengaged from the implement frame 11, and the tractor 2 is moved forwards so that the coupling arms 125 are pivoted forwards, the locking portions 127 allowing the coupling beam to pivot around its vertical pivot axis 124. Thereby the tractor 2 achieves a larger distance to the implement 1, and the coupling beam 12 may be pivoted around its vertical pivot axis 124.

According to the second embodiment of the invention, the coupling beam 12 is released from its first position W by the relevant blocking devices 115 being deactivated so that the coupling beam 12 may be displaced forwards in the implement frame 11 to its second position T in which relevant blocking devices (not shown) are activated so that the pivot axle 1211 of the coupling beam 12 is prevented from being displaced in the frame slots 117. The connection pins 128 of the coupling beam 12 are thereby moved forwards so that the tractor 2 achieves a larger distance to the implement 1 and the coupling beam 12 may be pivoted around its vertical pivot axis 124.

According to the third embodiment of the invention, the coupling beam 12 is released from its first position W by the frame couplings 13 being released. The tractor 2 is moved forwards so that the coupling beam 12 is pulled away from the implement frame 11 and the drawbars 14a, 14b are extended to their second position T.

It goes for all the embodiments that when the coupling beam 12 is placed in its second position T, the draft links 211 of the tractor 2 are lifted so that the forward portion of the implement 1 is lifted from the supporting surface. The implement 1 is now supported by the wheels 15 of the implement 1 and the draft links 211 of the tractor 2 and can thus be moved as a trailed implement.

When driving through a bend, the implement 1 is pivoted relative to the tractor 2 at the forward pivot joint 141 according to the third embodiment, which forms the connection between the drawbars 14a, 14b and the coupling beam 12. The spaced-apart rear pivot joints 143a, 143b form a rigid connection between the implement 1 and the unfolded drawbars 14a, 14b which, in this state, form the transport drawbar 14 projecting forwards from the implement 1.

When resetting to the first position W, the implement 1 may be lowered onto the supporting surface by the wheel/wheels 15 being lifted and the draft links 211 being lowered. The tractor 2 is reversed so that the coupling beam 12 engages with the frame couplings 13 and is locked, possibly is locked or restricted from pivoting movement by the relevant blocking devices 115 being activated. According to the third embodiment of the invention, the drawbars 14a, 14 are folded up.

It goes for all the embodiments that when the first position W has been achieved for the coupling beam 12, the top link 212 is connected to the headstock 112, possibly is readjusted from its float position, and the implement 1 is then manoeuvred as a three-point-mounted implement.

## Claims

1. An attachment system for an implement (1) which is arranged to be connected, at least in a working position, to a three-point implement linkage (21) on an implement carrier (2), and which is provided with at least one wheel (15) which is arranged to support the implement (1) in the transport position of the implement (1), **characterized in that**
connection pins (128) which are arranged to be connected to the lower three-point connectors (211a, 211b) of a three-point implement linkage (21) are arranged to be adjustable between a retracted first position (W), wherein a coupling beam (12) is locked to an implement frame (11) in a rotationally rigid manner, or in a position in which a limited pivoting is allowed, and an extended second position (T) displaced in a direction away from an implement frame (11), wherein the coupling beam (12) is extendedly pivotal relative to the implement frame (11), wherein
the attachments system comprises coupling means (126, 128, 125; 1211, 117; 14, 141, 142, 143) arranged to connect the coupling beam (12) to the implement frame (11) in a rotationally rigid manner,
change from rigid to free pivotal state of the coupling beam (12) is obtained by displacement of the connecting pins (128) forward in relation to the implement frame (11) thereby affecting the coupling means (126, 128, 125; 1211, 117; 14, 141, 142, 143) such that a larger distance between the connecting pins (128) and the implement frame (11) is obtained after unlocking locking means (127, 114; 115; 13, 143c); and wherein
a) the coupling beam (12) connected to the connection pins (128) is fixed, to the implement frame (11) in said first position (W), and the coupling beam (12) in said second position (T) is pivotal around a vertical pivot axis (124) in the implement frame (11), the connection pins (128) being arranged in end portions of coupling arms (125) attached to end portions of the coupling beam (12) and adjustable between a retracted position wherein the coupling beam (12) is partly pivotal or rigidly locked, and a position projecting forwards wherein the coupling beam (12) is extendedly pivotal, or
b) the coupling beam (12) which is arranged to be connected to the lower three-point connectors (211a, 211b) of the implement carrier (2), is releasably connected to a lower, forward frame portion (111) of the implement (1), and a middle portion (121) of the coupling beam (12) is provided with a vertical pivot axle (1211) in engagement with cut-outs (117) in the implement frame (11), or
c) a coupling beam (12), which is arranged to be connected to lower three-point connectors (211a, 21b) of the implement carrier (2), is releasably connected to a lower, forward frame portion (111) of the implement (1), and two foldable drawbars (14a, 14b) connect a middle portion (121) of the coupling beam (12) to the lower, forward frame portion (111), the drawbars (14a, 14b) including several pivot joints (141, 142, 143; 141, 142, 143a, 143b) provided with substantially vertical pivot axes.

2. The attachment system according to claim 1, wherein the coupling arms (125) are arranged to be pivotal around coinciding horizontal pivot axes (126) which are arranged between a first end portion (1251) and a second end portion (1252) of the coupling arms (125) and in end portions of the coupling beam (12).

3. The attachment system according to claim1, wherein the coupling arms (125) are provided with locking portions (127) arranged, in a first position (W) of the coupling arms (125), to lockingly engage with engagement portions (114) of the implement frame (11).

4. The attachment system according to claim1, wherein the implement frame (11) is provided with several blocking devices (115) which are arranged to lockingly engage with the coupling arms (125).

5. The attachment system according to claim 1, wherein the pivoting of the coupling beam (12) in its first position (W) and its second position (T) is restricted by adjustable blocking devices (115) or abutment portions (118) in the implement frame (11).

6. The attachment system according to claim 1, wherein each of the drawbars (14a, 14b) is connected to the implement frame (11) via a rear pivot joint (143; 143a, 143b).

7. The attachment system according to claim7, wherein the drawbars (14a, 14b) are arranged with a rear pivot joint (143) with coinciding pivot axes, and the pivoting of the drawbars (14a, 14b) at the rear pivot joint (143) is restricted by a joint block (143c).

8. The attachment system according to claim7, wherein the drawbars (14a, 14b) are arranged with a pivot joint (143a, 143b) each, arranged in a spaced-apart manner.

9. The attachment system according to claim 1, wherein the implement (1) is a plough.

## Patentansprüche

1. Befestigungssystem für ein Arbeitsgerät (1), welches dazu eingerichtet ist mit einer Dreipunktaufhängung (21) auf einem Geräteträger (2), zumindest in einer Arbeitsstellung, verbunden zu werden, und das mit mindestens einem Rad (15) versehen ist, welches dazu eingerichtet ist, das das Arbeitsgerät (1) in der Transportstellung des Arbeitsgerätes (1) abzustützen, **dadurch gekennzeichnet, dass**
Verbindungsstifte (128), welche dazu eingerichtet sind mit den unteren Dreipunktverbindem (211a, 211b) einer Dreipunktaufhängung (21) verbunden zu werden, dazu eingerichtet sind, zwischen einer eingezogenen ersten Position (W), in welcher ein Kopplungsträger (12) an einen Geräterahmen (11) in einer verschwenksicheren Art oder in einer Position, in der ein begrenztes Verschwenken möglich ist, arretiert ist, und einer ausgefahrenen zweiten Position (T), die in einer Richtung weg von einem Geräterahmen (11) versetzt ist, verstellbar zu sein,
wobei das Befestigungssystem Kopplungsmittel (126, 128, 125, 1211, 117; 14, 141, 142, 143) umfasst, welche dazu eingerichtet sind, den Kopplungsträger (12) mit dem Geräterahmen (11) in einer verschwenksicheren Art zu verbinden,
Wechsel von einem starren zu einem frei verschwenkbaren Zustand des Kopplungsträgers (12) wird erreicht durch, in Bezug auf den Geräterahmen (11), vorwärts Verschieben der Verbindungsstifte (128), wodurch die Kopplungsmittel (126,128, 125, 1211, 117; 14, 141, 142, 143) beeinflusst werden, so dass, nach einem Entriegeln von Verriegelungsmitteln (127, 114; 115, 13, 143c) eine grössere Distanz zwischen den Verbindungsstiften (128) und dem Geräterahmen (11) erreicht wird;
und wobei
a) der mit den Verbindungsstiften (128) verbundener Kopplungsträger (12) in besagter erster Position (W) am Geräterahmen (11) befestigt ist, und der Kopplungsträger (12) in besagter zweiter Position (T) um eine vertikale Schwenkachse (124) im Geräterahmen (11) verschwenkbar ist, die Verbindungsstifte (128) sind in Endabschnitten von Kopplungsarmen (125) angeordnet, welche an Endabschnitten des Kopplungsträgers (12) befestigt sind und zwischen einer eingezogenen Position, in welcher der Kopplungsträger (12) teilweise verschwenkbar oder fest arretiert ist, und einer nach vome stehenden Position, in welcher der Kopplungsträger (12) erweitert verschwenkbar ist, verstellbar sind, oder
b) der Kopplungsträger (12), welcher dazu eingerichtet ist mit den unteren Dreipunktverbindem (211a, 211b) des Geräteträgers (2) verbunden zu werden, mit einem unteren, vorderen Rahmenabschnitt (111) des Arbeitsgerätes (1) lösber verbunden ist, und ein mittlerer Abschnitt (121) des Kopplungsträgers (12) mit einer, mit Aussparungen (117) im Geräterahmen (11) verbundenen, vertikalen Schwenkachse (1211) versehen ist, oder
c) ein Kopplungsträger (12), welcher dazu eingerichtet ist mit unteren Dreipunktverbindern (211a, 21b) des Geräteträgers (2) verbunden zu werden, mit einem unteren, vorderen Rahmenabschnitt (111) des Arbeitsgerätes (1) lösbar verbunden ist, und zwei klappbare Deichseln (14a, 14b) einen mittleren Abschnitt (121) des Kopplungsträgers (12) mit dem unteren, vorderen Rahmenabschnitt (111) verbinden, die Deichseln (14a, 14b) umfassen mehrere Schwenkgelenke (141, 142, 143); 141, 142, 143a, 143b) mit im Wesentlichen vertikalen Schwenkachsen.

2. Befestigungssystem nach Anspruch 1, wobei die Kopplungsarme (125) um übereinstimmende horizontale Schwenkachse (126) im Kopplungsträger (12) verschwenkbar angeordnet sind, welche zwischen einem ersten Endabschnitt (1251) und einem zweiten Endabschnitt (1252) der Kopplungsarme (125) und in Endabschnitten des Kopplungsträgers (12) angeordnet sind.

3. Befestigungssystem nach Anspruch 1, wobei die Kopplungsarme (125) mit Verriegelungsabschnitten (127) versehen sind, die in einer ersten Position (W) der Kopplungsarme (125) angeordnet sind, um mit Eingriffsabschnitten (114) des Geräterahmen (11) formschlüssig in Eingriff zu stehen.

4. Befestigungssystem nach Anspruch 1, wobei der Geräterahmen (11) mit mehreren Sperrvorrichtungen (115) versehen ist, welche so angeordnet sind, dass sie mit den Kopplungsarmen (125) formschlüssig in Eingriff zu stehen.

5. Befestigungssystem nach Anspruch 1, wobei das Schwenken des Kopplungsträgers (12) in seiner ersten Position (W) und seiner zweiten Position (T) durch einstellbare Sperrvorrichtungen (115) oder Anschlagabschnitte (118) im Geräterahmen (11) begrenzt ist.

6. Befestigungssystem nach Anspruch 1, wobei jede der Deichseln (14a, 14b) über ein hinteres Schwenkgelenk (143; 143a, 143b) mit dem Geräterahmen (11) verbunden ist.

7. Befestigungssystem nach Anspruch 6, wobei die Deichseln (14a, 14b) mit einem hinteren Drehgelenk (143) mit übereinstimmenden Schwenkachsen angeordnet sind, und das Verschwenken der Deichseln (14a, 14b) am hinteren Drehgelenk (143) durch einen Gelenkblock (143c) begrenzt ist.

8. Befestigungssystem nach Anspruch 7, wobei die Deichseln (14a, 14b) jeweils mit einem Drehgelenk (143a, 143b) ausgestaltet sind, mit Abstand voneinander angeordnet.

9. Befestigungssystem nach Anspruch 1, wobei das Arbeitsgerät (1) ein Pflug ist.

## Revendications

1. Un système de fixation pour un outil (1), qui est agencé pour être relié, au moins dans une position de travail, à une liaison d'outil à trois points (21) sur un support d'outil (2), et qui est muni d'au moins une roue (15), qui est agencée pour supporter l'outil (1) dans la position de transport **de l'outil** (1), **caractérisé en ce que**
des broches de connexion (128) étant agencées pour être connectées aux connecteurs à trois points inférieurs (211a, 211b) d'une liaison d'outil à trois points (21), sont agencées pour être réglables entre une première position rétractée (W), dans laquelle une poutrelle de **couplage (12) est verrouillée à un cadre d'outil (11) d'une manière** rigide en rotation, ou dans une position dans laquelle un pivotement limité est permis, et une seconde position déployée (T) déplacée **dans une direction s'éloignant d'un** cadre d'outil (11), dans lequel la poutrelle de couplage (12) peut être pivotée par déploiement par rapport au cadre d'outil (11), **dans lequel**
le système de fixations comprend des moyens de couplage (126, 128, 125, 1211, 117 ; 14, 141, 142, 143) agencés pour connecter **la poutrelle de couplage (12) au cadre d'outil** (11) **d'une manière** rigide en rotation,
un changement depuis un état rigide vers un état de pivotement libre de la poutrelle de couplage (12) est obtenu par le déplacement des broches de connexion (128) vers l'avant **par rapport au cadre d'outil (11), ainsi affectant le moyen de couplage** (126, 128, 125, 1211, 117 ; 14, 141, 142, 143) **de sorte qu'une distance plus importante entre les** broches de raccordement (128) **et le cadre d'outil (11) est obtenue** après un déverrouillage des moyens de verrouillage (127, 114, 115, 13, 143c) ; et dans lequel
a) la poutrelle de couplage (12) connectée aux broches de connexion (128) est fixée au cadre d'outil (11) dans ladite première position (W), et la poutrelle de couplage (12) dans ladite seconde position (T) peut être pivoté autour d'un axe vertical de pivotement (124) dans **le cadre d'outil (11), les broches de** connexion (128) étant disposées dans des parties terminales de bras de couplage (125) attachés à des parties terminales de la poutrelle de couplage (12) est pouvant être ajustés entre une position rétractée, dans lequel la poutrelle de couplage (12) peut être partiellement pivotée ou verrouillée de manière rigide et une position faisant saillie vers l'avant, où la poutrelle de couplage (12) peut être pivotée de façon par déploiement, ou
b) la poutrelle de couplage (12) qui est agencée de façon à être connectée au **connecteur à trois points inférieurs (211a, 211b) de la liaison d'outil (2),** est connectée de manière libérable à une partie antérieure du cadre inférieure (111) **de l'outil (1), est une partie moyenne (121) de la** poutrelle de couplage (12) est munie d'un essieu de pivotement vertical (1211) en prise avec des encoches (117) **dans le cadre d'outil** (11), ou
c) la poutrelle de couplage (12), qui est est agencée de façon à être connectée aux connecteurs à trois points inférieurs (211a, 21b) du support d'outil (2), est connectée de manière libérable à une partie antérieure du cadre inférieure (111) de l'outil (1), et deux barres de traction pliables (14a, 14b) connectent une partie moyenne (121) de la poutrelle de couplage (12) à la partie antérieure du cadre inférieure (111), les barres de traction (14a, 14b) incluant plusieurs joints pivots (141, 142, 143; 142, 143a, 143b) munis **d'axes** de pivotement sensiblement verticaux.

2. Le système de fixation selon la revendication 1, dans lequel les bras de couplage (125) sont agencés de façon à pouvoir être pivotés autour d'axes de pivotement horizontaux coïncidants (126) qui sont disposés entre une première partie terminale (1251) et une seconde partie terminale (1252) des bras de couplage (125) est dans des parties terminales de la poutrelle de couplage (12).

3. Le système de fixation selon la revendication 1, dans lequel les bras de couplage (125) sont munis de parties verrouillantes (127) disposées, dans une première position (W) des bras de couplage (125), pour venir en prise de façon verrouillante avec des parties d'engagement (114) du **cadre d'outil (11).**

4. Le système de fixation selon la revendication 1, dans lequel le **cadre d'outil (11) est muni** de plusieurs dispositifs de blocage (115) qui sont disposés pour venir en prise de façon verrouillante avec les bras de couplage (125).

5. Le système de fixation selon la revendication 1, dans lequel le pivotement de la poutrelle de couplage (12) dans sa première position (W) et dans sa seconde position (T) est restreint par des dispositifs de blocage ajustables (115) ou par des parties de butée (118) dans le cadre d'outil (11).

6. Le système de fixation selon la revendication 1, dans lequel chacune des barres de traction (14a, 14b) est connectée au **cadre d'outil** (11) à travers un joint pivot arrière (143; 143a, 143b).

7. Le système de fixation selon la revendication 6, dans lequel les barres de traction (14a, 14b) sont munies **d'un joint pivot arrière** (143) ayant des axes de pivotement coïncidants et le pivotement des barres de traction (14a, 14b) au niveau des joints pivot arrière (143) est restreint par un bloc de joint (143c).

8. Le système de fixation selon la revendication 7, dans lequel les barres de traction (14a, 14b) sont agencées chacune avec un joint pivot (143a, 143b), agencées de manière espacée l'une par rapport à l'autre.

9. Le système de fixation selon la revendication 1, dans lequel l'outil (1) est une charrue.
